# EUROPEAN PATENT SPECIFICATION

(11) **EP 1 455 922 B1**
(45) Date of publication and mention of the grant of the patent: **28.04.2010**
(21) Application number: 02793703.6
(22) Date of filing: 19.12.2002
(51) Int. Cl.: B01D 33/23

(54) **FILTER SECTOR FOR ROTARY DISC FILTERS**
FILTERSEKTOR FÜR DREHSCHEIBENFILTER
SECTEUR DE FILTRE POUR FILTRES A DISQUE ROTATIF

(30) Priority: 19.12.2001 SE 0104306
(43) Date of publication of application: 15.09.2004
(73) Proprietor: GLV Finance Hungary Kft., Luxembourg branch, 5365 Munsbach (LU)
(72) Inventor: HÄGG, Conny, S-141 42 Huddinge (SE); EK, Bo, S-122 37 Enskede (SE)
(74) Representative: Rosenquist, Per Olof
(86) International application number: PCT/SE2002/002402
(87) International publication number: WO 2003/051487

(56) References cited:
- WO-A1-98/11972
- US-A- 3 948 779
- US-A- 5 635 062

## Description

The present invention relates to a filter sector for rotary disc filters, comprising first and second outer walls of filter cloth defining a filtrate chamber (15) for receiving filtrate that has flowed through the first and second outer walls of filter cloth. The outer walls of filter cloth are pleated so that a plurality of ridges and valleys are formed as seen from outside the filter sector. First and second liquid permeable support walls support the first and second outer walls, respectively, the first and second support walls being arranged in the filtrate chamber and defining a filtrate channel with a filtrate outlet. Filter sectors of this kind are assembled to form circular filter discs, which are utilized in rotary disc filters for filtering suspensions, in particular fibre suspensions.

A known filter sector of this kind is disclosed in Swedish Patent Application No. 9901154-6. The outer walls of filter cloth of the known filter sector are assembled to a self-rigid filter sector and are oriented relative to one another such that the ridges and valleys of the filter cloths form radial channels in the filtrate chamber. The provision of ridges and valleys gives the known filter sector a higher filtrate capacity than traditional filter sectors with planar walls of filter cloth.

However, it has been proved that the filter cloths of the known filter sector according to the Swedish patent application have a relatively poor fatigue resistance against dynamic pressure strains acting on the filter sector during the rotation of the filter sector through the suspension to be filtered. This results in that the threads of the filter cloths over time are stretched locally and finally break, so that the filtrate efficiency is deteriorated. For this reason the filter cloths have a relatively short lifetime and have to be exchanged for new ones too often, which is unsatisfying.

One way of eliminating the problem of poor fatigue resistance of the filter cloths is to design the outer walls from perforated sheets, such as plates, which are profiled so that ridges and valleys are formed, whereby the need for filter cloths is eliminated. Such a filter sector with profiled plates is disclosed in WO 98/11972. However, perforated and profiled plates have many drawbacks. Perforated plates give a relatively poor filtrate capacity, since the open area is relatively small. Relatively expensive machining of the plates, such as punching or drilling, is required to form the perforations. In addition, the perforations constitute indications of fracture, which become aggravated when profiling the plates. Such indications of fracture can rapidly give rise to larger fractures of the plate, so that the plate has to be replaced. For these reasons, the arrangement of profiled and perforated plates is not any satisfactory alternative to filter cloths.

US 3948779 discloses a rotary disc filter with filter sectors having pleated perforated support walls and filter cloths that along their entire surfaces are supported by the support walls. As a result, the filter cloths assume the same pleated shape as the support walls. However, this known filter sector is quite complicated, because it requires pleating of the support walls to a fan-shaped form and the arrangement of rods along the valleys of the filter cloths to secure the filter cloths onto the support walls.

The object of the present invention is to provide a simple, high capacity filter sector of the kind discussed above.

This object is obtained by a filter sector of the kind initially stated characterized in that solely the valleys of the outer walls of filter cloth are supported by the support walls. As a result, the filter sector of the invention is much simpler than known filter sector according to US 3948779. Furthermore, the dynamic strains that the filter sector is subjected to during operation will substantially be carried by the support walls, which significantly reduces the stretch of the threads of the filter cloths, so that the lifetime of the filter cloths is increased.

The filter cloths preferably comprises a metal net, for example a pulp wire cloth.

Rotary filters provided with filter sectors of the kind here presented typically have an outlet device for filtrate adapted to receive the filtrate from the radially inner ends of the filter sectors. Therefore, the support walls suitably form a filtrate outlet for the filtrate channel at the radially inner end of the filter sector. (Alternatively, however, the filtrate outlet may be arranged at other locations on the filter sector, for example at the radially outer end of the filter sector.)

Each support wall suitably is planar or at least substantially planar and preferably is made of a net coarser than the filter cloth. Alternatively, however, each support wall may comprise a perforated sheet, for example of perforated plate.

According to a first embodiment of the invention, spacers join the support walls to each other, so that the support walls and spacers form a sector-shaped framework. Each outer wall of pleated filter cloth is advantageously mounted on a frame, so that the outer wall and the frame form a separate filter cloth unit. By releseably attaching such a filter cloth unit to the sector-shaped framework it will be very simple and time-saving to exchange the filter cloth unit, in case the latter is damaged, for a new filter cloth unit.

According to a second embodiment of the invention the filter sector comprises a sector-shaped grating arranged in the filtrate chamber, the support walls abutting against the grating at mutual sides thereof. Advantageously, each outer wall of pleated filter cloth is attached to a frame and to the associated support wall, so that the outer wall, frame and support wall form a separate filter cloth unit, which is releasably attached to the grating. The filter cloth unit according to the second embodiment thus differs from the filter cloth unit according to the first embodiment described above in that the also the support wall is included. In the same manner as described for the filter cloth unit according to the first embodiment it will also be very simple and time-saving to exchange the filter cloth unit according to the second embodiment, in case the latter is damaged, for a new filter cloth unit.

According to a third embodiment of the invention the first and second support walls comprise opposite walls of a net bag. In this case the filter sector suitably comprises a sector-shaped grating arranged in the filtrate chamber, wherein the net bag fits on the grating. The net bag may be more or less flexible and be made of plastic or metal.

To further counteract detrimental stretches in the threads of the filter cloths each outer wall of filter cloth may be joined to its associated support wall by at least one joint element arranged on the outer wall spaced apart from the confining edges of the filter sector, preferably centrally on the outer wall. For example, three or more joint elements may be evenly distributed on each outer wall. Each joint element is suitably releasable to facilitate exchange of a damaged or worn out filter cloth. For example, the joint element may comprise a screw joint. Alternatively, however, it is possible to use a joint element in the form of a permanent rivet joint, welded joint, soldered joint, or the like. It is also conceivable to use a joint element in the form of a glue joint, which may be permanent or releasable, for example releasable with the aid of heat.

The invention is described in more detail in the following with reference to the accompanying drawings, in which
Figure 1 shows a filter sector according to the invention,
Figure 2 shows a cross-section through a filter sector according a first embodiment of the invention,
Figure 3 shows the embodiment according to Figure 2 with disassembled parts,
Figure 4 shows a cross-section through a filter sector according to a second embodiment of the invention,
Figure 5 shows the embodiment according to Figure 4 with disassembled parts,
Figure 6 shows a cross-section through a filter sector according to a third embodiment of the invention,
Figure 7 shows a filter cloth unit of the embodiment according to Figure 6, and
Figure 8 shows a sector-shaped grating of the embodiment according to Figure 6.

In the figures identical components have been provided with the same reference numerals.

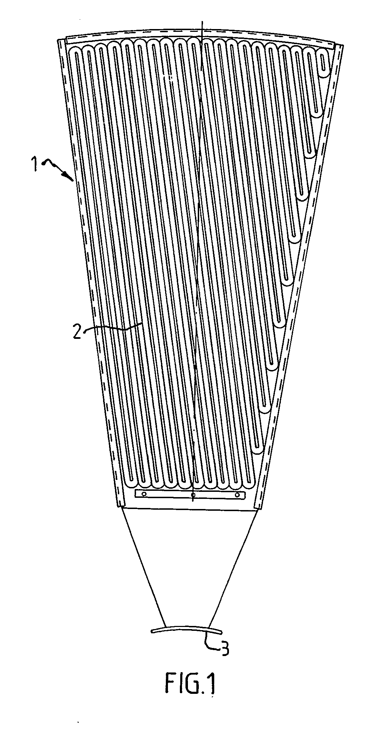

Figure 1 shows a filter sector 1 according to the invention comprising a filter cloth 2, which is pleated so that parallel substantially radially directed ridges and valleys of the filter cloth 2 are formed. The filter cloth 2 consists of a workable metal net, such as pulp wire cloth. A filtrate outlet 3 for filtrate that has flowed through the filter cloth 2 to the interior of the filter sector 1 is arranged at the radially inner end of the filter sector. A number of such filter sectors 1 are to be assembled to form a circular filter disc, which is used in a rotary disc filter.

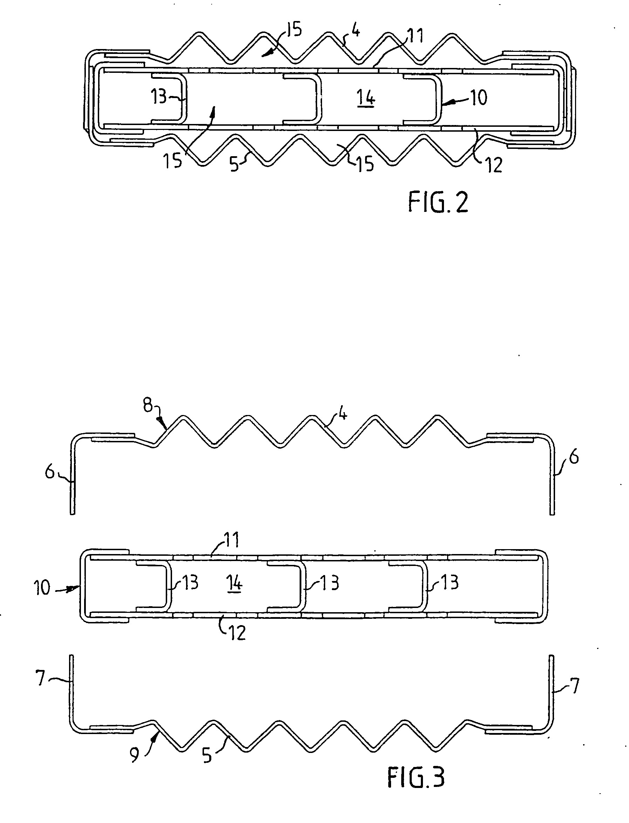

Figures 2 and 3 show an embodiment of the filter sector 1, comprising two sector-shaped outer walls 4 and 5 of pleated filter cloth 2. Each outer wall 4 and 5, respectively, is at its circumferential edge attached to a frame 6 and 7, respectively, so that a separate filter cloth unit 8 and 9, respectively, is formed, see figure 3. At their frames 6, 7 the filter cloth units 8, 9 are releasably attached to a sector-shaped framework 10, which comprises two planar perforated support walls 11, 12 of plate. Spacers 13 permanently join the support walls 11, 12 to each other, so that they extend in parallel with each other and define a filtrate channel 14. The filtrate channel 14 communicates with the filtrate outlet 3. Between the two outer walls 4, 5 of filter cloth there is formed a filtrate chamber 15 for receiving filtrate that has flowed through the outer walls 4, 5, see figure 2.

During operation, filtrate flows through the outer walls 4, 5 of filter cloth and further through the perforated support walls 11, 12 into the filtrate channel 14 where the filtrate flows further in the direction radially inwardly (towards the thinner end of the filter sector) to the filtrate outlet 3.

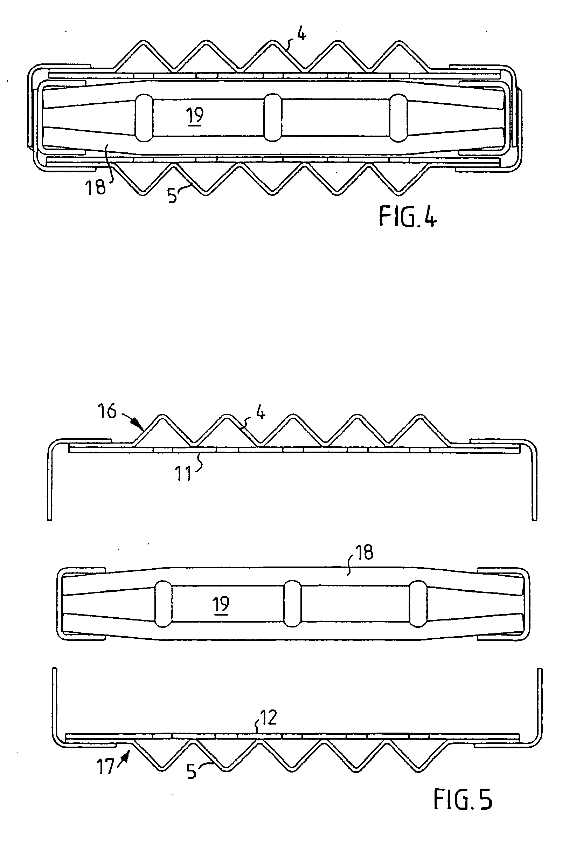

Figures 4 and 5 show another embodiment of the filter sector 1, which differs from the embodiment according to figures 2 and 3 in a different design of the sector-shaped framework and filter cloth units. Thus, the separate filter cloth unit 16 and 17, respectively, also includes the perforated support wall 11 and 12, respectively, which is attached to the outer wall 4 and 5, respectively, see figure 5. At their frames 6, 7 the filter cloth units 16, 17 are releasably attached to a frame-work in the form of a sector-shaped grating 18, which forms a filtrate channel 19, see figure 4. A number of joint elements (not shown) joining the outer walls 4, 5 of filter cloth with their associated support walls 11, 12 may be arranged suitably centrally on the filter cloth units 16, 17.

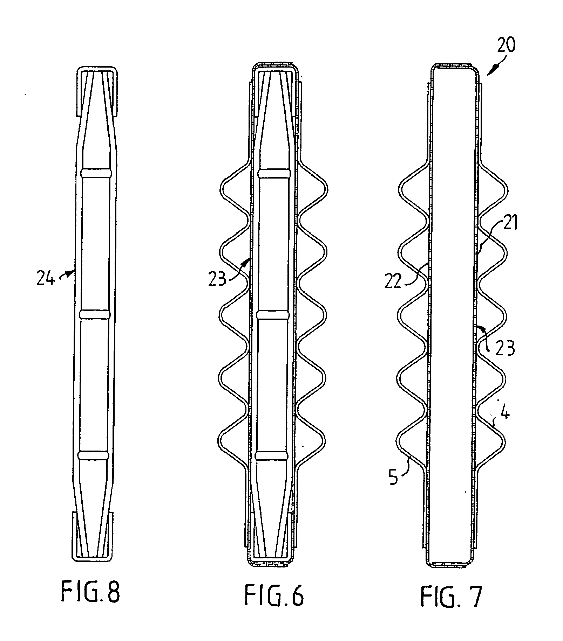

Figure 6 shows an embodiment of the invention that differs from the embodiment according to figures 4 and 5 in a different design of the support walls. Thus, one single separate filter cloth unit 20, see figure 7, comprises substantially planar support walls of two opposite sides 21 and 22 of a net bag 23 and two pleated outer walls 4, 5 of filter cloth that are attached to respective sides 21, 22 of the net bag 23. The net bag 23 fits on a separate sector-shaped grating 24 of a kind similar to the grating 18 of the embodiment according to figures 4 and 5.

Alternatively, like the support walls 21,22 of the embodiment according to figures 6-8 also the support walls 11,12, of the embodiments shown in figures 2-5 may be made of net.

The releasable filter cloth units 6, 7, 16, 17, 20 enable a simple and rapid exchange of damaged or worn out filter cloths for new ones. Thus, the single damaged outer wall of filter cloth is not exchanged but the entire filter cloth unit is exchanged for a new prefabricated filter cloth unit.

## Claims

1. A filter sector (1) for rotary disc filters, comprising first and second outer walls (4,5) of filter cloth defining a filtrate chamber (15) for receiving filtrate that has flowed through the first and second outer walls of filter cloth, the outer walls of filter cloth being pleated so that a plurality of ridges and valleys are formed as seen from outside the filter sector, and first and second liquid permeable support walls (11,21;12,22) supporting the first and second outer walls (4,5), respectively, the first and second support walls being arranged in the filtrate chamber and defining a filtrate channel (14;19) between said support walls with a filtrate outlet (3), **characterized in that** solely the valleys of the outer walls (4,5) of filter cloth are supported by the support walls (11,21;12,22).

2. A filter sector according to claim 1, **characterized in that** the support walls (11,12;21,22) are at least substantially planar.

3. A filter sector according to claim 2, **characterized in that** spacers (13) join the support walls (11, 12) to each other, so that the support walls and spacers form a sector-shaped framework (10).

4. A filter sector according to claim 3, **characterized in that** each outer wall (4, 5) of filter cloth is attached to a frame (6), so that the outer wall and frame form a filter cloth unit (8; 9), and that each filter cloth unit is releasably attached to the sector-shaped framework (10).

5. A filter sector according to claim 2, **characterized by** a sector-shaped grating (18) arranged in the filtrate chamber (15), the support walls (11, 12) abutting against the grating (18) at mutual sides thereof.

6. A filter sector according to claim 5, **characterized in that** each outer wall (4; 5) of filter cloth is attached to a frame (6) and to the associated support wall (11; 12), so that the outer wall, frame and support wall form a filter cloth unit (16; 17), and that each filter cloth unit is releasably attached to the grating (18).

7. A filter sector according to any one of claims 1-6, **characterized in that** each support wall comprises a perforated sheet (11, 12).

8. A filter sector according to any one of claims 1-6, **characterized in that** each support wall (21,22) is made of net (23) coarser than the filter cloth.

9. A filter sector according to claim 8, **characterized in that** the first and second support walls comprise opposite walls (21, 22) of a net bag (23).

10. A filter sector according to claim 9, **characterized by** a sector-shaped grating (24) arranged in the filtrate chamber (15), the net bag (23) fitting on the grating (24).

11. A filter sector according to any one of claims 1-10, **characterized in that** each outer wall (4; 5) of filter cloth is joined to its associated support wall (11; 12) by at least one joint element arranged on the outer wall spaced apart from the confining edges of the filter sector (1).

12. A filter sector according to any one of claims 1-6, 8-11, **characterized in that** each outer wall (4; 5) of filter cloth comprises a metal net.

## Patentansprüche

1. Filtersektor (1) für Drehscheibenfilter, umfassend erste und zweite Außenwände (4, 5) aus Filterstoff, die eine Filtratkammer (15) definieren, um ein Filtrat aufzunehmen, das durch die ersten und zweiten Außenwände aus Filterstoff geflossen ist, wobei die Außenwände aus Filterstoff gefaltet sind, so dass von außerhalb des Filtersektors gesehen eine Vielzahl von Spitzen und Tälern gebildet wird, und erste und zweite flüssigkeitsdurchlässige Stützwände (11, 21; 12, 22), die jeweils die ersten und zweiten Außenwände (4, 5) stützen, wobei die ersten und zweiten Stützwände in der Filtratkammer angeordnet sind und zwischen den Stützwänden einen Filtratkanal (14; 19) mit einem Filtratauslass (3) definieren, **dadurch gekennzeichnet, dass** nur die Täler der Außenwände (4, 5) aus Filterstoff von den Stützwänden (11, 21; 12, 22) gestützt werden.

2. Filtersektor nach Anspruch 1, **dadurch gekennzeichnet, dass** die Stützwände (11, 12; 21, 22) mindestens im Wesentlichen eben sind.

3. Filtersektor nach Anspruch 2, **dadurch gekennzeichnet, dass** Abstandhalter (13) die Stützwände (11, 12) miteinander verbinden, so dass die Stützwände und die Abstandhalter eine sektorförmige Konstruktion (10) bilden.

4. Filtersektor nach Anspruch 3, **dadurch gekennzeichnet, dass** jede Außenwand (4, 5) aus Filterstoff an einem Rahmen (6) angebracht ist, so dass die Außenwand und der Rahmen eine Filterstoffeinheit (8; 9) bilden, und dass jede Filterstoffeinheit lösbar an der sektorförmigen Konstruktion (10) angebracht ist.

5. Filtersektor nach Anspruch 2, **gekennzeichnet durch** ein sektorförmiges Gitter (18), das in der Filtratkammer (15) angeordnet ist, wobei die Stützwände (11, 12) an dem Gitter (18) auf beiden Seiten desselben zur Anlage kommen.

6. Filtersektor nach Anspruch 5, **dadurch gekennzeichnet, dass** jede Außenwand (4; 5) des Filterstoffs an einem Rahmen (6) und an der dazugehörigen Stützwand (11; 12) angebracht ist, so dass die Außenwand, der Rahmen und die Stützwand eine Filterstoffeinheit (16; 17) bilden, und dass jede Filterstoffeinheit lösbar an dem Gitter (18) angebracht ist.

7. Filtersektor nach einem der Ansprüche 1 bis 6, **dadurch gekennzeichnet, dass** jede Stützwand eine perforierte Schicht (11, 12) umfasst.

8. Filtersektor nach einem der Ansprüche 1 bis 6, **dadurch gekennzeichnet, dass** jede Stützwand (21, 22) aus einem Netz (23) hergestellt wird, das gröber ist als der Filterstoff.

9. Filtersektor nach Anspruch 8, **dadurch gekennzeichnet, dass** die ersten und zweiten Stützwände gegenüberliegende Wände (21, 22) eines Netzbeutels (23) umfassen.

10. Filtersektor nach Anspruch 9, **gekennzeichnet durch** ein sektorförmiges Gitter (24), das in der Filtratkammer (15) angeordnet ist, wobei der Netzbeutel (23) auf das Gitter (24) passt.

11. Filtersektor nach einem der Ansprüche 1 bis 10, **dadurch gekennzeichnet, dass** jede Außenwand (4; 5) aus Filterstoff mit ihrer dazugehörigen Stützwand (11; 12) durch mindestens ein Fügeelement zusammengefügt ist, das auf der Außenwand von den Dämmrändern des Filtersektors (1) beabstandet angeordnet ist.

12. Filtersektor nach einem der Ansprüche 1 bis 6, 8 bis 11, **dadurch gekennzeichnet, dass** jede Außenwand (4; 5) aus Filterstoff ein Metallnetz umfasst.

## Revendications

1. Secteur de filtre (1) pour filtres à disque rotatif, comprenant des première et seconde parois externes (4, 5) de toile filtrante définissant une chambre de filtrat (15) destinée à recevoir le filtrat qui s'est écoulé à travers les première et seconde parois externes de la toile filtrante, les parois externes de la toile filtrante étant plissées de sorte qu'une pluralité de crêtes et de creux soient formés comme on peut le voir depuis l'extérieur du secteur de filtre, et des premières et secondes parois de support perméables au liquide (11, 21 ; 12, 22) supportant respectivement les première et seconde parois externes (4, 5), les premières et secondes parois de support étant agencées dans la chambre de filtrat et définissant un canal de filtrat (14 ; 19) entre lesdites parois de support avec une sortie de filtrat (3), **caractérisé en ce que** seuls les creux des parois de support (4, 5) de la toile filtrante sont supportés par les parois de support (11, 21 ; 12, 22).

2. Secteur de filtre selon la revendication 1, **caractérisé en ce que** les parois de support (11, 12 ; 21, 22) sont au moins sensiblement planes.

3. Secteur de filtre selon la revendication 2, **caractérisé en ce que** des entretoises (13) assemblent les parois de support (11, 12) l'une à l'autre, de sorte que les parois de support et les entretoises forment une structure en forme de secteur (10).

4. Secteur de filtre selon la revendication 3, **caractérisé en ce que** chaque paroi externe (4, 5) de la toile filtrante est attaché à un cadre (6), de sorte que la paroi externe et le cadre forment une unité de toile filtrante (8 ; 9), et que chaque unité de toile filtrante soit fixée de façon détachable à la structure en forme de secteur (10).

5. Secteur de filtre selon la revendication 2, **caractérisé par** une grille en forme de secteur (18) agencée dans la chambre de filtrat (15), les parois de support (11, 12) venant en butée contre la grille (18) sur des côtés mutuels de celle-ci.

6. Secteur de filtre selon la revendication 5, **caractérisé en ce que** chaque paroi externe (4 ; 5) de la toile filtrante est fixée à un cadre (6) et à la paroi de support associée (11 ; 12), de sorte que la paroi externe, le cadre et la paroi de support forment une unité de toile filtrante (16 ; 17), et que chaque unité de toile filtrante soit fixée de façon détachable à la grille (18).

7. Secteur de filtre selon l'une quelconque des revendications 1 à 6, **caractérisé en ce que** chaque paroi de support comprend une feuille perforée (11, 12).

8. Secteur de filtre selon l'une quelconque des revendications 1 à 6, **caractérisé en ce que** chaque paroi de support (21, 22) est constituée d'un filet (23) plus épais que la toile filtrante.

9. Secteur de filtre selon la revendication 8, **caractérisé en ce que** les premières et secondes parois de support comprennent les parois opposées (21, 22) d'un sac en filet (23).

10. Secteur de filtre selon la revendication 9, **caractérisé par** une grille en forme de secteur (24) agencée dans la chambre de filtrat (15), le sac en filet (23) étant fixé sur la grille (24).

11. Secteur de filtre selon l'une quelconque des revendications 1 à 10, **caractérisé en ce que** chaque paroi externe (4 ; 5) de la toile filtrante est assemblée à sa paroi de support associée (11 ; 12) par au moins un élément de jonction agencé sur la paroi externe à l'écart des bords de confinement du secteur de filtre (1).

12. Secteur de filtre selon l'une quelconque des revendications 1 à 6 et 8 à 11, **caractérisé en ce que** chaque paroi externe (4 ; 5) de la toile filtrante comprend un filet métallique.
